Europäisches Patentamt

European Patent Office

Office européen des brevets

(11) Veröffentlichungsnummer: **0 451 613 A1**

## (12) EUROPÄISCHE PATENTANMELDUNG

(21) Anmeldenummer: **91104817.1**

(22) Anmeldetag: **26.03.91**

(51) Int. Cl.5: **G01L 3/14**

(30) Priorität: **12.04.90 DE 4011986**

(43) Veröffentlichungstag der Anmeldung:
**16.10.91 Patentblatt 91/42**

(84) Benannte Vertragsstaaten:
**AT BE CH DE FR GB IT LI LU NL**

(71) Anmelder: **Look S.A.**
**Rue de la Pique**
**F-58004 Nevers cedex(FR)**

(72) Erfinder: **Mercat, Jean-Pierre**
**24 Rue Gambetta**
**F-37110 Chateau-Renault(FR)**

(74) Vertreter: **Dipl.-Phys.Dr. Manitz**
**Dipl.-Ing.Dipl.-Wirtsch.-Ing. Finsterwald**
**Dipl.-Phys. Rotermund Dipl.-Chem.Dr. Heyn**
**B.Sc.(Phys.) Morgan**
**Robert-Koch-Strasse 1**
**W-8000 München 22(DE)**

(54) **Vorrichtung zur Messung von Antriebsmomenten.**

(57) Es wird eine Vorrichtung zur Messung und/oder Anzeige des zwischen einem antreibbaren Organ (1) und einem angetriebenen Organ (2) übertragenen Antriebsmoments bzw. der entsprechenden Leistung beschrieben, wobei in dem hohen Antriebsmomenten entsprechenden Bereich der Relativverdrehung zwischen diesen beiden Organen wenigstens ein diese Relativverdrehung zumindest erschwerendes Element (5) wirksam ist.

Fig.2

Die Erfindung betrifft eine Vorrichtung zur Messung des auf ein antreibbares Rad, insbesondere auf das Antriebsrad eines Fahrrades ausgeübten Antriebsmomentes und/oder damit verbundener Größen mit einer Anordnung zur Erfassung der in Abhängigkeit vom jeweiligen Antriebsmoment auftretenden Relativbewegung bzw. Relativverdrehung zwischen einem antreibenden Organ, insbesondere einer Antriebsachse, und einem angetriebenen, insbesondere aus einer Radnabe bestehenden Organ.

Aus der DE-A1 31 50 149 ist es bekannt, bei einem als Sport- oder Trainingsgerät verwendeten Fahrrad eine weitgehend verlustlose Leistungsmessung dadurch zu erreichen, daß zwischen einem angetriebenen Getrieberad und einem anzutreibendem Bauteil eine elastische Verbindung vorgesehen ist und der Drehwinkel gemessen wird, der sich beim Aufbringen von Antriebskräften auf das Getrieberad durch die Relativverdrehung zwischen Getrieberad und anzutreibendem Bauteil einstellt. Das Hauptproblem dieser und vergleichbarer Leistungsmessungen besteht darin, daß die zu erfassenden Leistungen sich über einen sehr großen Bereich erstrecken, da beispielsweise ein Radsprinter beim Start ein Antriebsmoment von etwa 160 Nm erzeugen kann, während ein Radfahrer auf ebener Straße bei einer Geschwindigkeit von etwa 20 km/h nur ein mittleres Antriebsmoment in der Größenordnung von 4 Nm, d. h. etwa nur 3 % des vorhergehenden Wertes erzeugt.

Die zu erfassende Leistung stellt bei einem Fahrrad, das über die hintere Nabe angetrieben wird, das Produkt aus dem Drehmoment (Nm) und der Drehgeschwindigkeit des Hinterrades (rad s) dar. Während es keine besonderen Schwierigkeiten bereitet, die Geschwindigkeit mit ausreichend hoher Genauigkeit zu messen, ist es außerordentlich problematisch, sowohl sehr geringe als auch sehr hohe Antriebsmomente mit der erforderlichen Genauigkeit zu erfassen. Unter Berücksichtigung der vorstehend angegebenen Beispielswerte für auftretende Antriebsmomente muß zur Gewährleistung brauchbarer Meßwerte sichergestellt werden, daß über den gesamten Meßbereich eine Auflösegenauigkeit von mindestens 3 % erzielt wird, d. h. es muß von der entsprechenden Vorrichtung ein äußerst hohes Auflösevermögen gefordert werden.

Die Erzielung eines derart hohen Auflösevermögens ist aber deshalb äußerst schwierig, weil der maximale Verdrehungswinkel zwischen antreibendem Organ und angetriebenem Organ in der Größenordnung von 2,5° liegt und demgemäß ein Verdrehungswinkel von etwa 0.075° gemessen und zur Anzeige gebracht werden muß, wenn ein Antriebsmoment von 4 Nm vorliegt, wie dies in der bereits erwähnten Weise bei einem Fahren von 20 km/h auf ebener Fahrbahn gegeben ist. Wenn man ferner berücksichtigt, daß diese Verdrehungswinkel im Falle des Antriebs eines Fahrrads über die Hinterradnabe bei einem antreibenden Organ mit einem Durchmesser von etwa 20 mm bestimmt werden muß, dann ist ersichtlich, daß zur Erzielung der geforderten Auflösegenauigkeiten Positionsänderungen in der Relativlage der beiden zueinander verdrehbaren Organe in der Größenordnung von 0,5 µm zu erfassen sind, was grundsätzlich äußerst schwierig ist und noch durch die im praktischen Betrieb auftretenden Vibrationen erschwert wird.

Aufgabe der Erfindung ist es, eine Vorrichtung der eingangs angegebenen Art in der Weise auszubilden, daß trotz der sehr geringen Relativverdrehungen zwischen antreibendem und angetriebenem Organ und trotz der im praktischen Betrieb auftretenden erschwerenden Bedingungen, wie Vibrationen, Stöße und dgl., die Antriebsmomente und damit die Leistung mit hoher Auflösung bestimmt werden kann, und zwar auf kostengünstige und zuverlässige Weise.

Gelöst wird diese Aufgabe nach der Erfindung im wesentlichen dadurch, daß in dem hohen Antriebsmomenten entsprechenden Bereich der Relativbewegung bzw. Relativverdrehung von antreibendem und angetriebenem Organ wenigstens ein die Relativbewegung bzw. die Relativverdrehung zumindest erschwerendes Element wirksam ist.

Die erfindungsgemäße Lösung basiert auf der Überlegung, daß die in der Praxis auftretenden sehr hohen Antriebsmomente nur äußerst selten vorkommen und stets von sehr kurzer Dauer sind und während dieser sehr kurzen Zeitspannen die sich auf dem Fahrrad befindende Person derart auf die Erbringung dieser ungewöhnlich hohen Leistung konzentriert ist, daß keine Zeit und praktisch auch keine Möglichkeit besteht, die in diesen kurzen Momenten erbrachte Leistung an einem Anzeigegerät zur Kenntnis zu nehmen.

Durch das die Relativbewegung bzw. Relativverdrehung zwischen antreibendem und angetriebenem Organ erschwerende und im Extremfall auch blockierende Element ist es möglich, den Haupt-Meßbereich, der üblicherweise für die auftretenden Antriebsmomente 50 Nm nicht überschreitet, mit entsprechend hohem Auflösevermögen auszubilden und das Auflösevermögen in dem sich anschließenden Bereich hoher Antriebsleistungen entsprechend zu verringern oder nur noch eine das Überschreiten des Normal-Meßbereichs anzeigende Signalisierung vorzunehmen.

Bevorzugt besteht das zwischen dem antreibenden und dem angetriebenen Organ wirksame Element aus einem Anschlag, der entweder als starrer Anschlag oder als elastischer Anschlag ausgebildet ist.

In beiden Fällen kann beim Wirksamwerden des jeweiligen Anschlags eine akustische oder optische Signalgabe erfolgen, wobei im ersteren Falle dieses Signal nur besagt, daß der Normalmeßbereich mit hohem Auflösevermögen verlassen worden ist, während im zweiten Falle zusätzlich auch noch die erreichten höheren Leistungswerte angezeigt werden, jedoch mit entsprechend verringertem Auflösevermögen.

Die Anschläge sind vorzugsweise verstellbar ausgebildet, so daß der Meßbereich bzw. die Meßbereiche variiert werden können.

Durch Verwendung mehrerer elastischer Anschläge ist es erfindungsgemäß möglich, Systeme variabler Sensibilität zu schaffen, was für manche Fälle von Vorteil ist.

Weitere vorteilhafte Ausgestaltungen der Erfindung sind in den Unteransprüchen angegeben.

Ausführungsbeispiele der Erfindung werden unter Bezugnahme auf die Zeichnung näher erläutert; in der Zeichnung zeigt:

Fig. 1    eine schematische Darstellung zur Erläutertung des Prinzips bekannter Vorrichtungen zur Bestimmung des Antriebsmoments,

Fig. 2    eine schematische Darstellung zur Erläuterung der Arbeitsweise der erfindungsgemäßen Vorrichtung in einem vorgebbaren Meßbereich,

Fig. 3    eine weitere schematische Darstellung der Anordnung nach Fig. 2 bei Überschreiten des vorgebbaren Meßbereichs,

Fig. 4    eine schematische Darstellung zur Erläuterung einer Weiterbildung der Vorrichtung nach den Fig. 2 und 3 bei einer Arbeitsweise in einem ersten Meßbereich,

Fig. 5    eine schematische Darstellung analog der Fig. 4 während der Arbeitsweise in einem zweiten Meßbereich,

Fig. 6    ein den Unterschied zwischen bekannten Vorrichtungen und der erfindungsgemäßen Vorrichtung erläuterndes Diagramm, und

Fig. 7    ein weiteres Diagramm analog der Fig. 6, wobei in diesem Falle eine erfindungsgemäße Vorrichtung mit zwei unterschiedlichen Meßbereichen verwendet ist.

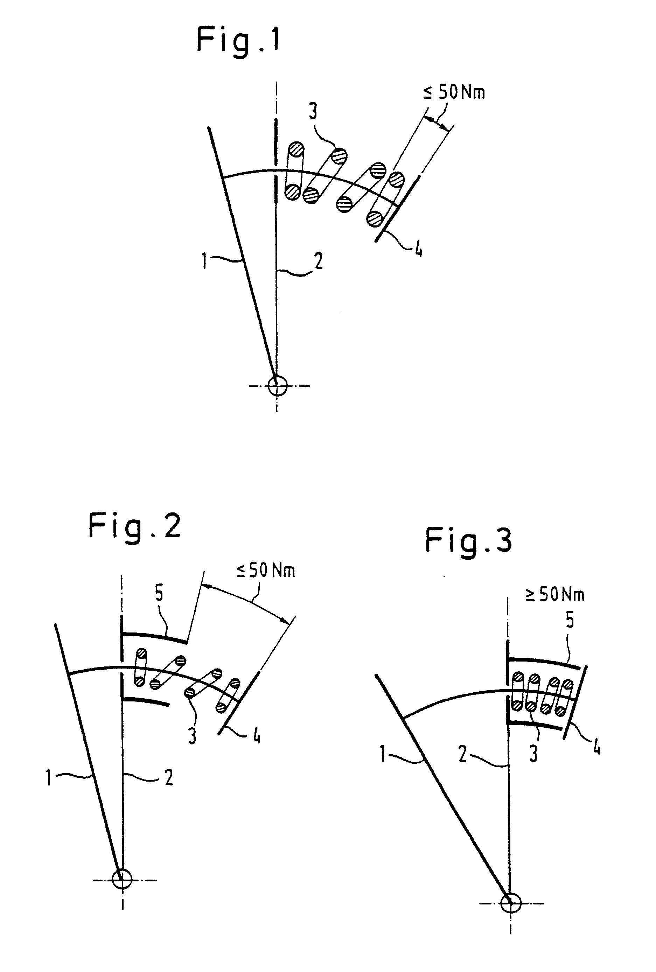

Die schematische Darstellung nach Fig. 1 zeigt ein antreibendes Organ 1 und ein angetriebenes Organ 2, wobei zwischen diesen beiden Organen 1, 2 eine Druckfeder 3 wirksam ist, die zwischen dem angetriebenen Organ 2 und einer mit dem antreibenden Organ 1 fest verbundenen Abstützung 4 angeordnet ist.

Diese Darstellung entspricht bei einem über eine Hinterradnabe angetriebenen Fahrrad der über ein Zahnrad angetriebenen Welle und der von der Welle betätigten Nabe, wobei die Welle in Abhängigkeit von dem aufgebrachten Antriebsmomente tordiert wird und damit gleichzeitig als Feder wirkt. Eine derartige Anordnung ist beispielsweise dargestellt in der deutschen Patentanmeldung P 39 12 883.0.

Die Feder 3 in der systematischen Darstellung nach Fig. 1 ist über den gesamten Bereich auftretender Antriebsmomente wirksam, d. h. in der Praxis über einem Bereich von etwa 150 Nm. Wie bereits erläutert wurde, liegen die Antriebsmomente während des normalen Betriebs des Fahrrads im Bereich bis 50 Nm, wie dies in Fig. 1 angedeutet ist. In diesem vergleichsweise kleinen Meßbereich von 0 bis 50 Nm kann dementsprechend nur eine geringe Auflösung gewährleistet werden, da die Relativbewegung zwischen führendem Organ 1 und geführtem Organ 2 sehr klein ist.

Fig. 2 zeigt in schematischer Weise das erfindungsgemäße Prinzip, das sich von der herkömmlichen, in Fig. 1 gezeigten Lösung dadurch unterscheidet, daß ein fester Anschlag 5 in Verbindung mit einer Feder 3 geringerer Steifigkeit vorgesehen ist.

Als Folge davon ergibt sich für Antriebsmomente bis beispielsweise 50 Nm ein mehrfach größerer Bereich der Relativbewegung und damit eine deutlich erhöhte Auflösung, während Antriebsmomente größer 50 Nm nicht mehr angezeigt werden, sondern nur noch signalisiert werden kann, daß der normale Meßbereich überschritten worden ist und demgemäß ein Antriebsmoment größer 50 Nm vorliegt.

Dieser zuletzt geschilderte Fall ist in Fig. 3 gezeigt, wobei in diesem Falle die Federabstützung 4 am Anschlag 5 anliegt oder die Feder 3 auf Block ist.

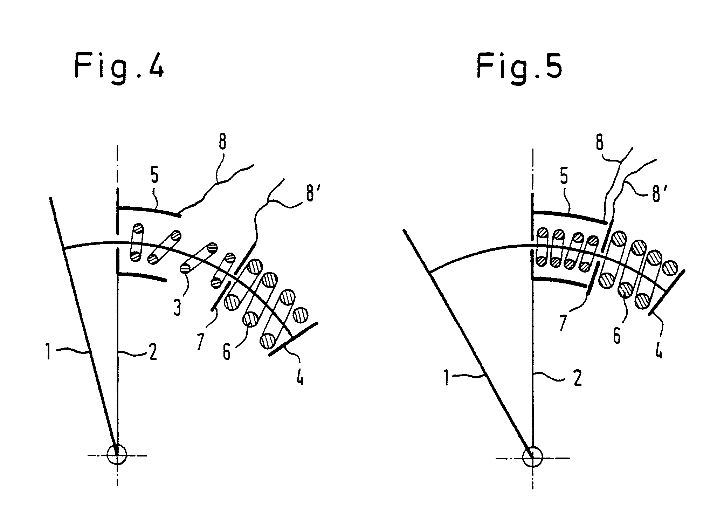

Die schematische Darstellung nach Fig. 4 zeigt den Fall der Verwendung eines elastischen Anschlags, der durch die Verwendung zweier unterschiedliche Federcharakteristik aufweisender Federn 3, 6 gekennzeichnet ist.

Zwischen dem antreibenden Organ 1 und dem angetriebenen Organ 2 wird in einem ersten Bereich von beispielsweise bis zu 50 Nm liegenden Antriebsmomenten die zwischen dem angetriebenen Organ 2 und dem Stützelement 7 angeordnete Feder 3 wirksam, da im Bereich dieser Antriebsmomente die wesentlich stärker ausgebildete Feder 6 zwischen den beiden Stützelementen 7, 4 noch nicht wirksam wird und wie ein praktisch starrer Körper wirkt.

Übersteigt das Antriebsmoment den vorgebbaren ersten Bereich und wird dieses Antriebsmoment beispielsweise größer als 50 Nm, dann gelangt das Stützelement 7 am Festanschlag 5 zur Anlage und es wird die stärker ausgebildete Feder 6 bei zunehmender Erhöhung des Antriebsmoments komprimiert.

Über elektrische Signalleitungen 8, 8' und entsprechende Sensoren oder Kontaktgaben kann dem Fahrer optisch und akustisch zur Kenntnis gebracht werden, daß der erste Meßbereich verlassen wurde und im zweiten Meßbereich die gewonnenen Meßwerte mit geringerer Auflösung angezeigt werden.

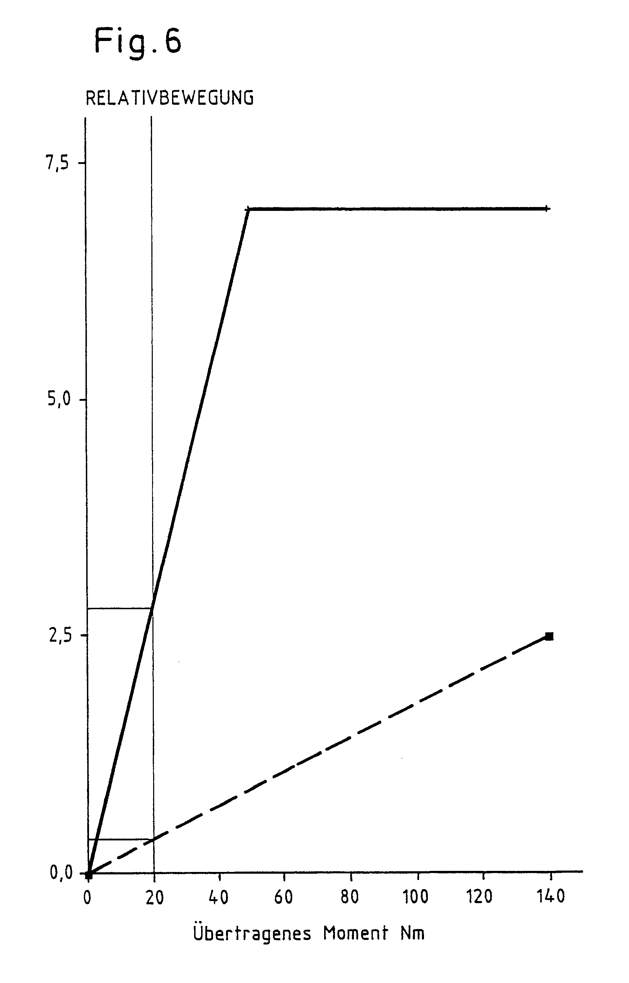

Das Diagramm nach Fig. 6 zeigt eine Gegenüberstellung der mit einer dem Stand der Technik entsprechenden Anordnung nach Fig. 1 erhaltenen Vorrichtung und der mit einer erfindungsgemäßen Anordnung nach den Fig. 2 und 3 erhaltenen Vorrichtung.

Während auf der Abszisse das jeweils zwischen antreibendem und angetriebenem Organ übertragene Moment aufgetragen ist, erscheint auf der Ordinate das Ausmaß der Verformung des zwischen diesen beiden Organen wirksamen, deformierbaren Elements, das von einer Feder aber auch von einer tordierbaren Welle gebildet sein kann.

Die strichlierte, relativ flach verlaufende Kurve entspricht dem Stand der Technik, und es ist zu sehen, daß in diesem Falle die Auflösung sehr gering ist, und zwar insbesondere in dem in der Praxis bedeutsamen Bereich von 0 bis 50 Nm.

Die mit durchgezogener Linie gezeichnete Charakteristik einer erfindungsgemäßen Anordnung nach den Fig. 2 und 3 verdeutlicht, daß gerade in dem interessierenden Bereich von 0 bis 50 Nm eine deutlich höhere Auflösung erreicht wird, während aufgrund des vorgesehenen Festanschlags in dem 50 Nm übersteigenden Bereich nur noch signalisiert wird, daß der Normal-Meßbereich überschritten worden ist, ohne aber Werte für diese nur selten erreichten Bereich anzugeben.

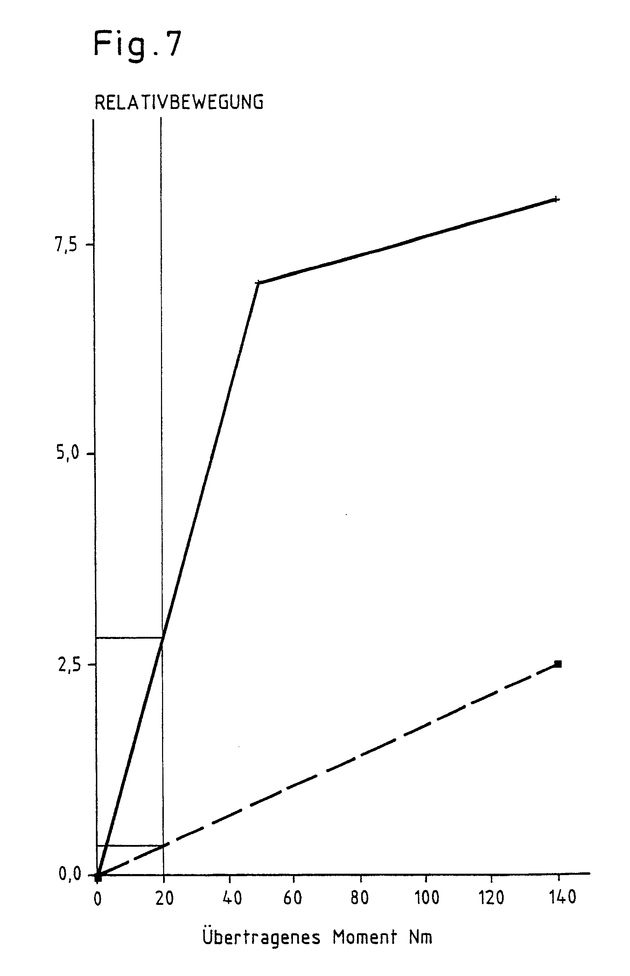

Fig. 7 zeigt wiederum einen Vergleich einer bekannten Vorrichtung mit der in den Fig. 4 und 5 gezeigten Ausführungsvariante der Erfindung.

Während die die bekannte Vorrichtung kennzeichnende, mit strichlierter Linie gezeichnete Kurve in gleicher Weise wie in Fig. 6 verläuft, ist aufgrund des elastischen Anschlags bei der erfindungsgemäßen Vorrichtung nunmehr auch eine Anzeige in dem 50 Nm überschreitendem Bereich möglich, allerdings mit verringerter Auflösung, da in diesem Bereich eine Feder von wesentlich größerer Steifigkeit Verwendung findet. Das Ausmaß der Steigung in diesem Bereich erhöhter Meßwerte kann demgemäß durch Wahl der Elastizität des Anschlags vorgegeben werden, wobei zu beachten ist, daß die in den Zeichnungen dargestellten Federn lediglich elastische Elemente symbolisieren.

Im Falle der Verwendung der erfindungsgemäßen Vorrichtung in der Nabe eines Hinterrades genügt es, zwischen der in Abhängigkeit vom Antriebsmoment tordierten Welle und der mit dieser Welle zusammenwirkenden Nabe einen Anschlag zwischen der Welle und der Nabe anzuordnen, wobei die Welle so ausgestaltet bzw. dimensioniert werden kann, daß ihr Torsionsverhalten Anzeigecharakteristiken entsprechend den Fig. 6 und 7 ermöglicht.

Durch Verwendung mehrerer nacheinander wirksam werdender elastischer Anschläge kann insgesamt problemfrei ein System mit variabler Sensibilität geschaffen werden, das in verschiedenen Anwendungsfällen von Vorteil sein kann. Beispielsweise kann eine Verwendung der Grundausführungsform und auch der erläuterten Weiterbildungen bei Geräten nach dem europäischen Patent 270 439, der Patentanmeldung P 39 12 576.9, der PCT-Anmeldung WO89/00401 oder der bereits erwähnten Patentanmeldung P 39 12 883.0 erfolgen.

## Patentansprüche

1. Vorrichtung zur Messung des auf ein antreibbares Rad, insbesondere auf das Antriebsrad eines Fahrrades ausgeübten Antriebsmomentes und/oder damit verbundener Grössen mit einer Anordnung zur Erfassung der in Abhängigkeit vom jeweiligen Antriebsmoment auftretenden Relativbewegung bzw. Relativverdrehung zwischen einem antreibenden Organ, insbesondere einer Antriebsachse, und einem angetriebenen, insbesondere aus einer Radnabe bestehenden Organ,
dadurch **gekennzeichnet,**
daß in dem hohen Antriebsmomenten entsprechenden Bereich der Relativbewegung bzw. Relativverdrehung von antreibendem und angetriebenen Organ (1, 2) wenigstens ein die Relativbewegung bzw. Relativverdrehung zumindest erschwerendens Element (5; 6, 7) wirksam ist.

2. Vorrichtung nach Anspruch 1,
dadurch **gekennzeichnet,**
daß das Element aus zumindest einem zwischen dem antreibenden und dem angetriebenen Organ (1, 2) wirksamen Anschlag (5; 6, 7) besteht.

3. Vorrichtung nach Anspruch 2,
dadurch **gekennzeichnet,**
daß der Anschlag als starrer Anschlag (5) ausgebildet ist.

4. Vorrichtung nach Anspruch 3,
dadurch **gekennzeichnet,**
daß der Anschlag als ein eine definierte Gegenkraft bewirkender elastischer Anschlag (6, 7) ausgebildet ist.

5. Vorrichtung nach einem der vorhergehenden Ansprüche,
   dadurch **gekennzeichnet,**
   daß zumindest ein Anschlag (5; 6, 7) verstellbar ausgebildet ist.

6. Vorrichtung nach einem der vorhergehenden Ansprüche,
   dadurch **gekennzeichnet,**
   daß mehrere elastische Anschläge (6, 7) vorgesehen sind, die bei zunehmender Relativbewegung bzw. Relativverdrehung nacheinander wirksam werden.

7. Vorrichtung nach Anspruch 6,
   dadurch **gekennzeichnet,**
   daß der Elastizitätsmodul der nacheinander wirksam werdenden elastischen Anschläge (6, 7) zumindest zum Teil unterschiedlich ist.

8. Vorrichtung nach Anspruch 7,
   dadurch **gekennzeichnet,**
   daß der Elastizitätsmodul der den höheren Antriebsmomenten zugeordneten Anschläge (6, 7) zunehmend größer gewählt ist.

9. Vorrichtung nach einem der vorhergehenden Ansprüche,
   dadurch **gekennzeichnet,**
   daß die Relativbewegung bzw. Relativverdrehung zwischen dem antreibenden und dem angetriebenen Organ (1, 2) durch die vom Antriebsmoment abhängige Torsion einer mit einer Nabe zusammenwirkenden Welle bestimmt ist, und daß zwischen Nabe und Welle zumindest ein die Relativverdrehung begrenzender Anschlag (5; 6, 7) vorgesehen ist.

10. Vorrichtung nach einem der vorhergehenden Ansprüche,
    dadurch **gekennzeichnet,**
    daß jedem die Relativbewegung bzw. Relativverdrehung zwischen antreibendem und angetriebenem Organ (1, 2) zumindest erschwerenden Element (5; 6, 7) ein elektrischer Signalgeber zur optischen und/oder akustischen Signalisierung der Änderung der Charakteristik bzw. der Anzeigeempfindlichkeit zugeordnet ist .

# Fig.1

# Fig.2

# Fig.3

# Fig.4

# Fig.5

# Fig.6

# Fig.7

RELATIVBEWEGUNG

Übertragenes Moment Nm

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| X | US - A - 4 592 241 (OBAYASHI et al.) * Fig. 5,7; Spalte 5, Zeilen 27-54 * | 1-3,9 | G 01 L 3/14 |
| X | GB - A - 2 039 063 (VOLKSWAGENWERK) * Fig. 1; Seite 2, Zeilen 15-31 * | 1-3 | |
| A | US - A - 4 723 450 (COULTER) * Fig. 1-3 * | 1,2,4 | |
| A | DE - A1 - 3 705 496 (HORIBA) * Zusammenfassung; Fig. 1-3 * | 1-6 | |
| D,A | EP - A1 - 0 270 439 (LOOK) * Fig. 1-5; Zusammenfassung * | 1 | |
| D,A | DE - A1 - 3 150 149 (SACHS) * Fig. 2; Seite 8, 3. Absatz * | 1 | |

RECHERCHIERTE SACHGEBIETE (Int. Cl⁵)

G 01 L 3/00
A 61 B 5/00

Der vorliegende Recherchenbericht wurde für alle Patentansprüche erstellt.

| Recherchenort | Abschlußdatum der Recherche | Prüfer |
|---|---|---|
| WIEN | 18-06-1991 | BURGHARDT |